# EUROPÄISCHE PATENTSCHRIFT

(11) **EP 2 273 669 B1**
(45) Veröffentlichungstag und Bekanntmachung des Hinweises auf die Patenterteilung: **07.09.2011**
(21) Anmeldenummer: 09006767.9
(22) Anmeldetag: 20.05.2009
(51) Int. Cl.: H02P 25/08

(54) **Frequenzumrichter für einen schaltbaren Reluktanzmotor und mechatronisches System**
Inverter for a switched reluctance motor and mechatronic system
Convertisseur de fréquence d'un moteur à réluctance commutée et système de mecatronique

(43) Veröffentlichungstag der Anmeldung: 12.01.2011
(73) Patentinhaber: Miele & Cie. KG, 33332 Gütersloh (DE)
(72) Erfinder: Sammoud, Hafedh, Dr.-Ing., 8090 Kelibia (TN); Rode, Peter, Dr., 53881 Euskirchen (DE); Kiefer, Andreas, 53115 Bonn (DE); Schaefer, Klaus, 53489 Sinzig (DE)

(56) Entgegenhaltungen:
- EP-A- 0 178 615
- EP-A- 0 802 623
- WO-A-2006/106530
- DE-A1- 4 406 546
- DE-A1- 19 620 808
- SLOBODAN VUKOSAVIC ET AL: "SRM INVERTER TOPOLOGIES: A COMPARATIVE EVALUATION" IEEE TRANSACTIONS ON INDUSTRY APPLICATIONS, IEEE SERVICE CENTER, PISCATAWAY, NJ, US, Bd. 27, Nr. 6, 1. November 1991 (1991-11-01), Seiten 1034-1047, XP000277291 ISSN: 0093-9994
- MIR S ET AL: "Energy efficient C-dump converters for switched reluctance motors" APPLIED POWER ELECTRONICS CONFERENCE AND EXPOSITION, 1996. APEC '96. C ONFERENCE PROCEEDINGS 1996., ELEVENTH ANNUAL SAN JOSE, CA, USA 3-7 MARCH 1996, NEW YORK, NY, USA,IEEE, US, Bd. 2, 3. März 1996 (1996-03-03), Seiten 968-973, XP010159829 ISBN: 978-0-7803-3044-3

## Beschreibung

Die Erfindung betrifft einen Frequenzumrichter, umfassend einen Gleichrichter zum Erzeugen bzw. zum Umwandeln einer netzseitigen Wechselspannung (UN) in eine gleichgerichtete Spannung in einem Zwischenkreis, zumindest einen gesteuerten Schalter zum Bestromen zumindest einer Phasenwicklung eines elektrischen Motors, der aus dem Gleichspannungs-Zwischenkreis gespeist wird, einer der Phasenwicklung zugeordneten Freilaufdiode zur Auskopplung von Kommutierungsenergie und einen Zwischenspeicher zum Speichern von Kommutierungsenergie aufgrund von Umladevorgängen in der Phasenwicklung.

Motoren mit elektronischer Kommutierung oder kollektorlose Elektromotoren werden oftmals mittels eines Frequenzumrichters bestromt, der einen Gleichrichter und einem nachgeschalteten Glättungskondensator zur Bereitstellung einer Gleichspannung in dem nachgeschalteten Gleichspannungs-Zwischenkreis umfasst. Der Kondensator ist hinsichtlich seiner Kapazität und Spannungsfestigkeit so ausgelegt, dass die Zwischenkreisspannung möglicht konstant ist, um eine gute Leistungsausbeute im Motor zu erzielen. Im Gleichspannungs-Zwischenkreis sind elektronische Schalter angeordnet, die die einzelnen Phasen der Motorwicklung ansteuern, um das magnetische Wechselfeld in den Statorpolen zu erzeugen. Erst das Wechselfeld bzw. das Drehfeld kann den Rotor zu der vorbestimmten Drehbewegung veranlassen. Bei dieser Schaltungsanordnung wird jedoch ein hoher Anteil von Oberschwingungen in das Versorgungsnetz zurückgespeist, die aufgrund der niederfrequenten Kopplung an die Frequenz des Versorgungsnetzes nur mit erhöhtem Aufwand gefiltert werden können.

Aus der EP 1 219 012 B1 A ist ein Frequenzumrichter zum Betreiben eines geschalteten Reluktanzmotors bekannt, der aufgrund seines einfachen Aufbaus bei Haushaltgeräten sehr beliebt ist. Der Frequenzumrichter umfasst im Gleichspannungs-Zwischenkreis zwischen den Polen einen Kondensator, der so dimensioniert ist, dass die gleichgerichtete Spannung nur teilweise auf ein gleichmäßiges Niveau geglättet wird. Durch die unvollständige Glättung können die Bauteilekosten erheblich reduziert werden, weil die Oberschwingungen im niedrigen Frequenzbereich der Netzfrequenz wesentlich geringer sind. Die Restwelligkeit bei der Ansteuerung der Schalter für die Bestromung der Phasenwicklungen muss hierbei jedoch mit berücksichtigt werden. Der Frequenzumrichter umfasst ferner eine Impedanz, die gemeinsam für alle Phasenwicklungen eine Netzrückspeisung bereitstellt, die dazu eingerichtet ist, einen Teil der Energie bei den Umladevorgängen innerhalb der einzelnen Phasenwicklungen jeweils kurzzeitig zwischen zu speichern, ein weiterer Teil der Energie wird im Glättungskondensator selbst zwischengespeichert. Da der Glättungskondensator zwischen den Polen des Gleichspannungs-Zwischenkreises angeschlossen ist, muss dieser für die maximal auftretende Spannung, die sich aus der Summe des Scheitelwertes der Netzspannung und dem Spannungsanteil einer beim Kommutieren abmagnetisierenden Spule zusammensetzt, dimensioniert sein.

Die EP 0 802 623 A1 offenbart einen Frequenzumrichter, der mit einer Gleichspannungsquelle versorgt wird, und zumindest einen gesteuerten Schalter zum Bestromen zumindest einer Phasenwicklung eines elektrischen Motors. Jeder Phasenwicklung ist eine Freilaufdiode zur Auskopplung von Kommutierungsenergie zugeordnet, wobei der Umrichter ferner einen Zwischenspeicher zum Speichern von Kommutierungsenergie aufgrund von Umladevorgängen in einzelnen Phasenwicklungen umfasst. Bei dem Zwischenspeicher handelt es sich um einen sogenannten Hilfsspeicher, der nur zur Ansteuerung bzw. Bestromung einer weiteren, separaten Phasenwicklung vorgesehen ist.

Aus der EP 0 738 035 A2 ist es bekannt, einen Frequenzumrichter ohne Glättungskondensator auszubilden. Hierbei wird die Energie während der Umladevorgänge in einem Kondensator zwischengespeichert, der zwischen dem geschalteten Minus-Pol des Phasenanschlusses und dem Minus-Pol des Gleichspannungs-Zwischenkreises geschaltet ist. Auch dieser als Zwischenspeicher fungierende Kondensator muss für die gesamte Spannung des Zwischenkreises, die sich aus der Summe des Scheitelwertes der Netzspannung und dem Spannungsanteil einer beim Kommutieren abmagnetisierenden Spule zusammensetzt, dimensioniert sein.

Aus der DE 44 06 546 B4 ist ein Frequenzumrichter zum Betreiben eines geschalteten Reluktanzmotors bekannt, der einen gleichgerichteten und nahezu vollständig geglätteten Gleichspannungszwischenkreis umfasst. Eine Kombination aus Trafo und Kondensator bildet den gemeinsamen Zwischenspeicher für die Energie während der Umladevorgänge. Hierbei wird der Trafo mittels eines weiteren Schalters getaktet, so dass eine optimale Übertragung der Energie während der Umladevorgänge bereitgestellt wird. Aufgrund des zusätzlichen Übertragers ist der Frequenzumrichter recht aufwändig.

Der Erfindung liegt somit die Aufgabe zugrunde, einen zuverlässigen Frequenzumrichter für einen geschalteten Reluktanzmotor bereit zu stellen, der einfacher und kostengünstiger aufgebaut ist.

Diese Aufgabe wird durch einen Frequenzumrichter mit den Merkmalen von Anspruch 1 und durch ein mechatronisches System, bestehend aus einem geschaltetem Reluktanzmotor und einem Frequenzumrichter, mit den Merkmalen von Anspruch 10 gelöst. Vorteilhafte Weiterbildungen ergeben sich aus den jeweiligen abhängigen Ansprüchen.

Die mit der Erfindung erreichbaren Vorteile bestehen darin, dass mit wenigen Bauteilen ein kostengünstiger, leistungsfähiger und zuverlässiger Frequenzumrichter für die Bestromung eines geschalteten Reluktanzmotors bereitgestellt wird.

Hierzu ist als Zwischenspeicher ein Kondensator vorgesehen, der zwischen dem Plus-Pol des Gleichspannungs-Zwischenkreises und dem Ausgang der Freilaufdiode geschaltet ist. Dieser Kondensator ist mittels eines weiteren Schalters überbrückbar, um einerseits das Zwischenspeichern von Kommutierungsenergie im Kondensator und andererseits das Bereitstellen der zwischengespeicherten Kommutierungsenergie zu ermöglichen. Die Spannung im Gleichspannungs-Zwischenkreis ist hierbei pulsierend, kann als zwischen 0V und dem Scheitelwert der Netzspannung schwanken. Beim Aufmagnetisieren eines Statorpols wird die zwischengespeicherte Kommutierungsenergie aus dem Kondensator verwendet. Hierbei ist es wichtig, dass das Schaltverhalten des Schalters für den Zwischenspeicher und der Kondensator für den Zwischenspeicher hinsichtlich der Lade- und Endladezeit so dimensioniert ist, dass ein vollständiges Einschalten und Abschalten innerhalb der halben Zeit oder kürzer der Phase des Auf- und Abmagnetisierens geschieht.

Diese Schaltungsanordnung ist besonders für die Kommutierung eines hochtourig geschalteten Reluktanzmotors geeignet, der hohe Anforderungen hinsichtlich der Schalthäufigkeit und des Schaltverhaltens erfüllen muss.

In einer zweckmäßigen Ausführung ist ausgehend vom Plus-Pol des Gleichspannungs-Zwischenkreises zu dem Anschluss für die Phasenwicklung eine Diode in Durchgangsrichtung geschaltet. Damit wird erreicht, dass beim Entladen des Kondensators und beim Freilauf kein Kurzschluss entsteht.

In einer vorteilhaften Ausführung ist auf der Primärseite des Gleichrichters ein Netzfilter angebracht, um damit auftretende Rückwirkungen auf das Versorgungsnetz in Form von Oberschwingungen des Stromes und/oder der Spannung zu mildern. Dies sind insbesondere hochfrequente Wechselspannungsanteile, die aufgrund des kommutierten Wechselfeldes bzw. Drehfeldes auf der Sekundärseite des Gleichrichters entstehen können, das in der Regel eine andere Frequenz und Phasenlage hat, als das Versorgungsnetz, das in Europa 230V, 50 Hz aufweist. Ferner entstehen Oberschwingungen auf der Primärseite durch steilflankige Transienten aufgrund der Schaltvorgänge im Gleichspannungs-Zwischenkreis.

Hierbei ist es zweckmäßig, dass das Netzfilter zumindest eine in Reihe geschaltete Induktivität und zumindest einen zwischen den Eingängen des Gleichrichters parallel geschalteten Kondensator umfasst. Das ist ein sogenanntes passives Filter, welches für die Milderung der in dieser Schaltung vorkommenden hochfrequenten Oberwellen vollkommen ausreichend ist. Ferner können aufgrund der hochfrequenten Filtereigenschaften kleine und kostengünstige Bauelemente verwendet werden.

Für die Kommutierung eines mehrpoligen Motors mit mehreren Phasenwicklungen ist es zweckmäßig, dass der Frequenzumrichter zwei oder mehrere Schalter und mehrere Freilaufdioden besitzt, wobei ein Schalter und eine Freilaufdiode jeweils einer einzelnen Phasenwicklung des Motors zugeordnet ist.

In dieser Anordnung bilden die Ausgänge der Freilaufdioden einen gemeinsamen Pol mit dem Zwischenspeicher.

Insgesamt ist es vorteilhaft, dass die Schalter jeweils zumindest einen Feldeffekt-Transistor, IGBT oder Bipolar-Transistor umfassen bzw. als solche ausgebildet sind. Diese sogenannten elektronischen Schalter sind einfach und leistungsarm anzusteuern und aufgrund des schnellen und steilflankigen Schaltverhaltens (schneller Stromanstieg beim Einschalten und schnelle Stromunterbrechung beim Abschalten) besonders für diesen Frequenzumrichter geeignet.

In einer zweckmäßigen Weiterbildung ist der versorgungsseitige Eingang des Gleichrichters für den Anschluss einer Batterie oder eines Akkumulators ausgebildet. Somit kann für sogenannte Hybridsysteme, die mittels Netzspannung und/oder alternativ mit einem Akkumulator oder einer Batterie betrieben werden können, ein einfacher und optimaler Frequenzumrichter ohne weitere Bauteile bereitgestellt werden. Das bedeutet, dass die Auswahl Versorgung auf der Primärseite des Frequenzumrichters mit Hilfe einer einfachen Schaltungsanordnung erfolgt.

Die Erfindung betrifft ferner ein Mechatronisches System, umfassend einen geschalteten Reluktanzmotor mit zumindest einer Phasenwicklung und zumindest zwei feststehenden Polen und einem mittels der Magnetisierungszustände der Pole bewegbaren oder drehbaren Rotor, einen Frequenzumrichter, wie er oben genannt ist und eine Steuereinrichtung mit einem Mikroprozessor und einem Speicher mit einem Programm, welches zur Ansteuerung der Schalter des Frequenzumrichters ausgebildet ist. Hierbei kann das Programm einfach auf den zu kommutierenden Motor hinsichtlich des Aufmagnetisierverhaltens und des Abmagnetisierverhaltens abgestimmt bzw. konfiguriert werden. Dies wird auf einfache Weise durch Anpassung von Parametern erreicht, die die Zeiten und die Wiederholraten für die einzelnen Schaltzustände der Schalter bzw. der elektronischen Schalter festlegen.

Das Programm ist zweckmäßigerweise dafür eingerichtet ist, dass der Mikroprozessor die Schalter zur Bereitstellung der Kommutierungszustände Aufmagnetisieren, Freilauf und Abmagnetisieren für die einzelnen Phasenwicklungen ansteuern kann.

Für einen sicheren Motorbetrieb ist das Programm dafür eingerichtet, die Schalter für die Kommutierungszustände in den Phasenwicklungen zur Bereitstellung eines Wechselfeldes oder Drehfeldes in den Polen zur Drehung des Rotors anzusteuern.

Ein Ausführungsbeispiel der Erfindung ist in den Zeichnungen rein schematisch dargestellt und wird nachfolgend näher beschrieben. Es zeigen:
- Fig. 1: ein skizziertes mechatronisches System,
- Fig. 2:: eine Skizze des Frequenzumrichters und
- Fig. 3a - 3d:: die Schaltzustände der Schaltungsanordnung.

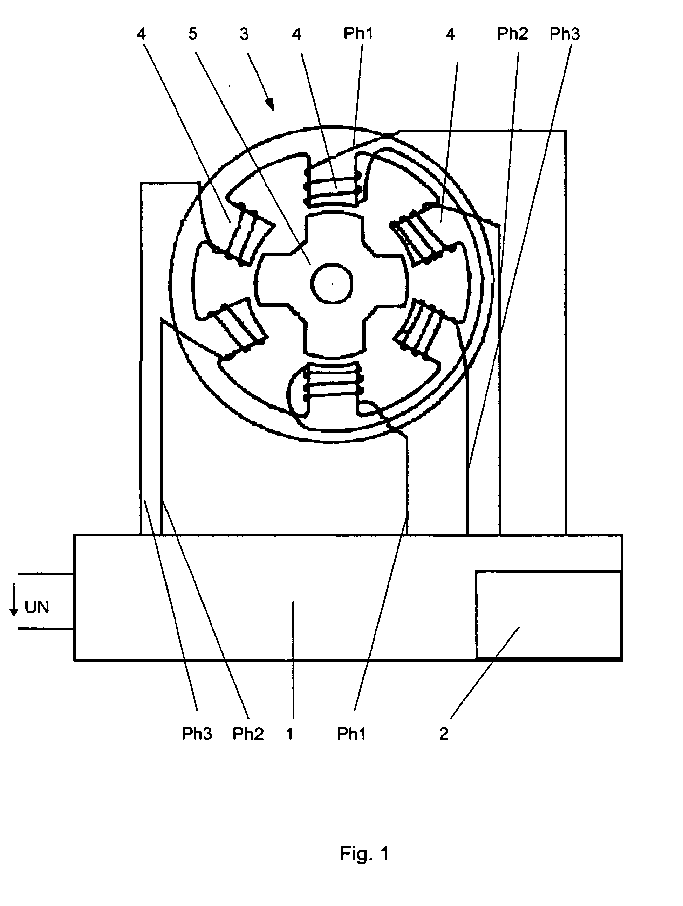

Fig. 1 zeigt als mechatronisches System einen geschalteten Reluktanzmotor 3, der mittels des Frequenzumrichters 1 bestromt wird. Der Motor 3 besitzt feststehende Statorpole 4, an denen jeweils eine Phasenwicklung Ph1, Ph2, Ph3 angebracht bzw. gewickelt ist. Im Inneren des Motors 3 ist ein Rotor 5 drehbar gelagert, der ebenfalls ausgebildete Pole besitzt, die sich entsprechend des Magnetisierungszustandes der Statorpole 4 ausrichten, wodurch die Drehbewegung des Rotors 5 bereitgestellt wird. Die freien Enden der einzelnen Phasenwicklungen Ph1, Ph2, Ph3 sind am Frequenzumrichter 1 angeschlossen, so dass innerhalb des Frequenzumrichters 1 die elektrische Verbindung der einzelnen Phasenenden bzw. die Phasenenden mit den entsprechenden elektrischen oder elektronischen Schaltern bereitgestellt wird. Der Frequenzumrichter 1 wird mittels der Eingangsspannung UN versorgt, in diesem Beispiel mit der europäischen Nennnetzspannung 230 V AC 50 Hz. Je nach Anwendungsfall kann der Frequenzumrichter 1 für eine andere Netzspannung oder Netzfrequenz ausgelegt sein, beispielsweise für andere Länder, für lokale Betriebsnetze oder Schiffe. Der Frequenzumrichter 1 umfasst in diesem Beispiel eine Steuereinrichtung 2, die dazu eingerichtet ist, die Schalter im Frequenzumrichter 1 zum vorbestimmten Betrieb des angeschlossenen Motors 3 zu schalten.

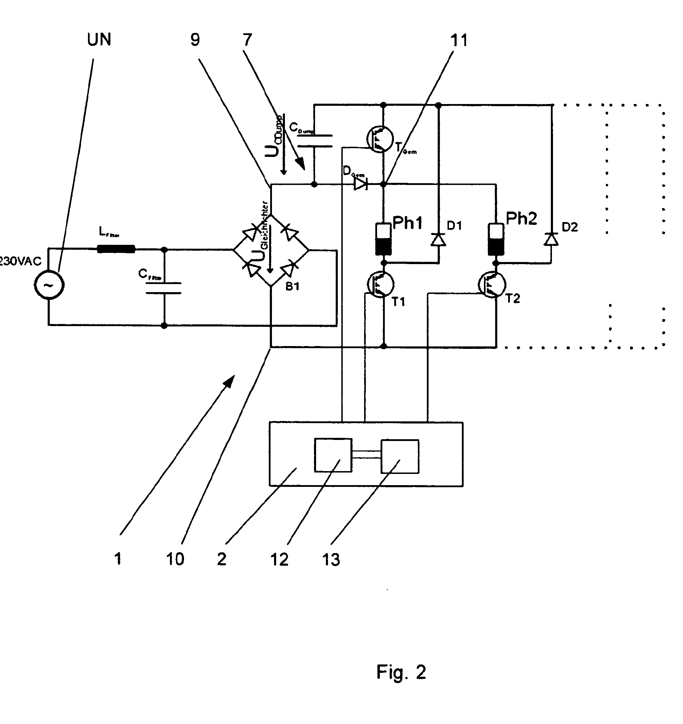

In der Fig. 2 ist die Schaltungsanordnung des Frequenzumrichters 1 zur Bestromung des Motors 3 aufskizziert. Die angelegte Versorgungsspannung UN (beispielsweise 230V-) wird mit einem Gleichrichter B1 in eine Gleichspannung UGleichrichter mit einem Pluspol 9 und einem Minuspol 10 gleichgerichtet. Die Gleichspannung UGleichrichter im Gleichspannungs-zwischenkreis 7 liegt hierbei pulsierend im Bereich von 0 V bis zum Scheitelwert der primärseitigen Versorgungsspannung, die bei 230 V Effektivwert etwa 320 V beträgt. Sie ist deshalb pulsierend, weil im Gleichspannungszwischenkreis keine Glättung, beispielsweise mit einem Kondensator zwischen dem Pluspol 9 und dem Minuspol 10, vorgenommen wird. Bei anderen Werten für die zugeführte Versorgungsspannung UN würden sich entsprechend andere Werte für die gleichgerichtete Spannung im Gleichspannungszwischenkreis 7 einstellen. An dem Gleichspannungszwischenkreis 7 sind die einzelnen Schalter T1, T2 für die einzelnen Phasenwicklungen Ph1, Ph2 angeordnet, die zwischen dem jeweiligen Phasenende und dem Minuspol 10 des Gleichspannungszwischenkreises liegen. Das jeweils andere Phasenende der einzelnen Phasenwicklungen Ph1, Ph2 ist auf einen gemeinsamen Pol 11 gelegt, der mit dem Schalterausgang des gemeinsamen Schalters TGem und des Ausgangs der gemeinsamen Diode DGem verbunden ist und vom Pluspol 9 ausgehend über die Diode DGem mit dem Pluspol 9 verbunden ist. Als Zwischenspeicher für die Kommutierungsenergie ist hierbei ein Kondensator CDump vorgesehen, der mit einem Anschluss am Pluspol 9 und mit dem zweiten Anschluss über die in Sperrrichtung geschalteten Dioden D1, D2 mit dem jeweiligen Phasenende verbunden ist, das wiederum an den jeweils der Phasenwicklung Ph1, Ph2 zugeordneten Schalter T1, T2 angeschlossen ist. Der als Zwischenspeicher fungierende Kondensator CDump ist hierbei als sogenannter "High Side CDump" ausgebildet. Der gemeinsame Schalter TGem ist dazu eingerichtet, den Kondensator CDump in zeitlichen Abschnitten zu überbrücken, damit eine Entladung des Kondensators über eine jeweils aktivierte Phasenwicklung Ph1 oder Ph2 erfolgen kann.

Eine Steuereinrichtung 2 ist dafür vorgesehen, die Schalter T1, T2 und TGem entsprechend den Kommutierungszuständen zum Betrieb des Motors 3 (Fig. 1) zu steuern. Die Steuereinrichtung 2 umfasst einen Mikroprozessor 12, der mit einem Speicher 13 in Verbindung steht, wobei im Speicher 13 das Programm zur Steuerung des Frequenzumrichters 1 abgespeichert ist. Die Steuereingänge der einzelnen Schalter, hier Feldeffekt-Transistoren, sind mit der Steuereinrichtung verbunden, so dass der Mikroprozessor 12 die Schaltvorgänge entsprechend steuern kann:

Das Netzfilter, welches passiv aus der in Reihe liegenden Induktivität LFilter und dem parallel zum Eingang des Gleichrichters B1 geschalteten Kondensator CFilter besteht, verhindert oder vermindert die Rückwirkungen von hochfrequenten Oberwellen auf das Versorgungsnetz UN, die durch die Schaltzustände der Schalter T1, T2, TGem und die Ströme aufgrund der Kommutierungsvorgänge entstehen.

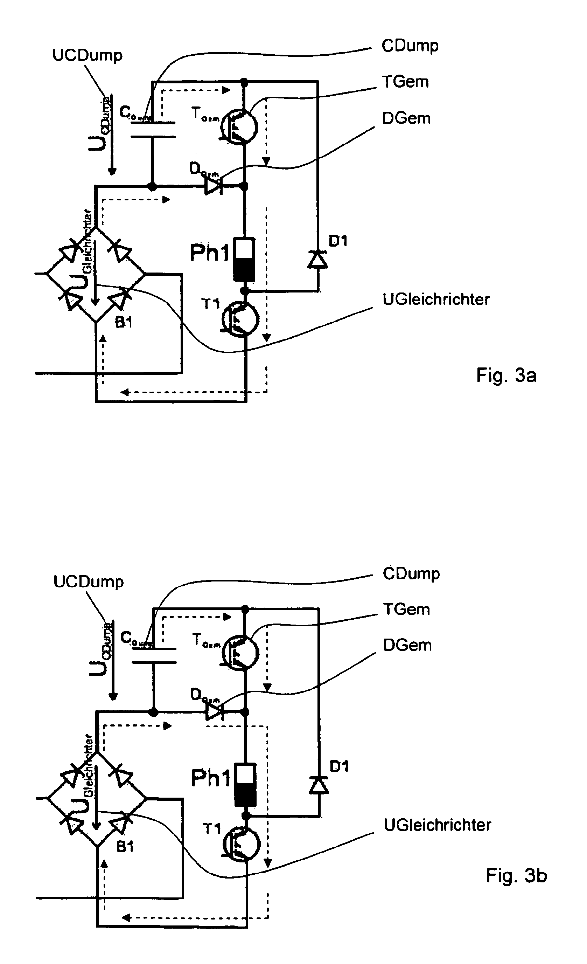

Fig. 3a bis 3d zeigen anhand einer Phasenwicklung Ph1 die unterschiedlichen Kommutierungszustände und die dazugehörigen Schalterzustände. Als Schalter T1, T2 und TGem werden hierbei Feldeffekt-Transistoren verwendet, die schnelle Einschalt- und Ausschaltzeiten bereitstellen, um Schaltverluste zu minimieren. Die Schaltzeiten sind für eine Schaltfrequenz im Bereich bis zu 6 KHz ausgelegt und sind für den Betrieb bzw. für die Bestromung eines mit hoher Drehzahl drehenden Reluktanzmotors notwendig, wobei bei einem Motor für ein Staubsaugergebläse Drehzahlen von 90 000 1/min auftreten können.

Fig. 3a zeigt den Kommutierungszustand des ersten Aufmagnetisierens. Hierbei ist der Schalter TGem und der Schalter T1 leitend, so dass an der Phasenwicklung Ph1 die Summe der Spannung UGleichrichter und UCDump anliegen. Die gestrichelten Pfeile zeigen die Fließrichtung des Stromes innerhalb der Schaltungsanordnung an. Hierbei ist zu erkennen, dass der Entladestrom des Kondensators CDump durch die Phasenwicklung Ph1 fließt. In dieser ersten Phase des Aufmagnetisierens wird zusätzlich zur Spannung des Gleichrichters B1 die im Kondensator CDump gespeicherte Energie genutzt, um einen Strom durch die Phasenwicklung Ph1 zu treiben. Die Dioden D1 und DGem sperren hierbei.

Fig. 3b zeigt den Kommutierungszustand des Aufmagnetisierens in einer späteren Phase. Der Schalter T1 ist weiterhin leitend, der Schaltzustand des Schalters TGem ist gesperrt, also hochohmig oder nicht leitend. Die im Kondensator zwischengespeicherte Energie ist zu diesem Zeitpunkt vollständig entladen, so dass kein Strom durch den Schalter TGem mehr fließen kann. Der weitere Aufmagnetisierungsvorgang wird hierbei nur noch durch den Strom aus dem Gleichrichter B1 bereitgestellt, der durch die Diode DGem, die Phasenwicklung Ph1 und den Schalter T1 fließt.

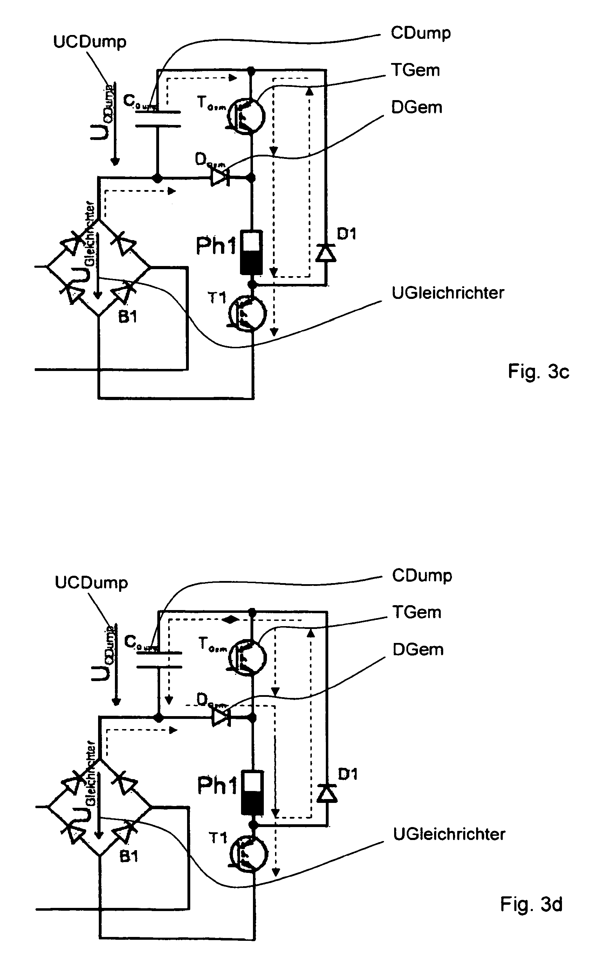

Fig. 3c zeigt den Kommutierungszustand des Freilaufs. In dieser Phase ist der Schalter TGem leitend und der Schalter T1 gesperrt, also hochohmig. Die Phasenwicklung Ph1 ist nun kurzgeschlossen, so dass die in Ph1 gespeicherte elektromagnetische Energie einen Strom durch die Freilaufdiode D1 und den Schalter TGem verursacht. Die Energie wird hierbei nur durch die ohmschen Verluste an der Phasenwicklung Ph1 und den Bauteilen TGem und der Diode D1 abgebaut bzw. verbraucht, bzw. in Wärme umgewandelt.

Fig. 3d zeigt den Kommutierungszustand des Abmagnetisierens des Statorpols bzw. der Statorwicklung Ph1, Ph2. Der Schalter T1 ist gesperrt und der Schaltzustand des Schalters TGem ist ebenfalls gesperrt, also hochohmig. Die elektromagnetische Energie in der Statorwicklung verursacht hierbei einen Strom, der durch die Freilaufdiode D1, den Kondensator CDump und die gemeinsame Diode DGem fließt. Dadurch wird der Kondensator CDump aufgeladen, so dass die elektromagnetische Kommutierungsenergie in diesem Kondensator CDump gespeichert wird. Dieses Abmagnetisieren geschieht im Gegensatz zum Aufmagnetisieren sehr schnell, es dauert etwa nur 1/20 bis 1/4 der Zeit des Aufmagnetisierens.

## Patentansprüche

1. Frequenzumrichter, umfassend einen Gleichrichter (B1) zum Erzeugen bzw. zum Umwandeln einer netzseitigen Wechselspannung (UN) in eine ZwischenkreisGleichspannung (UGleichrichter), zumindest einen gesteuerten Schalter (T1, T2) zum Bestromen zumindest einer Phasenwicklung (Ph1, Ph2) eines elektrischen Motors, der aus dem Gleichspannungs-Zwischenkreis (7) gespeist wird, einer jeweils einer Phasenwicklung (Ph1, Ph2) zugeordneten Freilaufdiode (D1, D2) zur Auskopplung von Kommutierungsenergie und einen Zwischenspeicher (CDump) zum Speichern von Kommunierungsenergie aufgrund von Umladevorgängen in der Phasenwicklung (Ph1, Ph2), **dadurch gekennzeichnet,**
**dass** der Zwischenspeicher ein Kondensator (CDump) ist, der zwischen dem Plus-Pol (9) des Gleichspannungs-Zwischenkreises (7) und dem Ausgang der Freilaufdiode (D1, D2) geschaltet ist, und dass der Kondensator (CDump) mittels eines weiteren Schalters (TGem) überbrückbar ist, wobei der Schalter (TGem) dazu eingerichtet ist, den Kondensator (CDump) in zeitlichen Abständen zu überbrücken, damit eine Entladung des Kondensators (CDump) über die jeweils aktivierte Phasenwicklung (Ph1, Ph2) erfolgen kann.

2. Frequenzumrichter nach Anspruch 1,
**dadurch gekennzeichnet,**
**dass** ausgehend vom Plus-Pol (9) des Gleichspannungs-Zwischenkreises (7) zu dem Anschluss für die Phasenwicklung eine Diode (DGem) in Durchgangsrichtung geschaltet ist.

3. Frequenzumrichter nach Anspruch 1,
**dadurch gekennzeichnet,**
**dass** auf der Primärseite des Gleichrichters ein Netzfilter angebracht ist.

4. Frequenzumrichter nach Anspruch 3,
**dadurch gekennzeichnet,**
**dass** das Netzfilter zumindest eine in Reihe geschaltete Induktivität (LFilter) und zumindest einen zwischen den Eingängen des Gleichrichters parallel geschalteten Kondensators (CFilter) umfasst.

5. Frequenzumrichter nach Anspruch 1 oder 2,
**dadurch gekennzeichnet,**
**dass** der Frequenzumrichter (1) zwei oder mehrere Schalter (T1, T2) und Freilaufdioden (D1, D2) besitzt, wobei die Schalter (T1, T2) und die Freilaufdioden (D1, D2) jeweils einer einzelnen Phasenwicklung (Ph1, Ph2) des Motors (3) zuzuordnen sind.

6. Frequenzumrichter nach Anspruch 5,
**dadurch gekennzeichnet,**
**dass** die Ausgänge der Dioden (D1, D2) einen gemeinsamen Pol (11) mit dem Eingang des Schalters (TGem) und dem Zwischenspeicher (CDump) bilden.

7. Frequenzumrichter nach Anspruch 5,
**dadurch gekennzeichnet,**
**dass** der Ausgang der gemeinsamen Diode (DGem) und der Ausgang des gemeinsamen Schalters (TGem) mit einem gemeinsamen Anschluss der Phasenwicklungen (Ph1, PH2) einen gemeinsamen Pol (11) bilden.

8. Frequenzumrichter nach Anspruch 1 oder 5,
**dadurch gekennzeichnet,**
**dass** die Schalter (T1, T2, TGem) jeweils zumindest einen Feldeffekt-Transistor, IGBT oder Bipolar-Transistor, umfassen.

9. Frequenzumrichter nach Anspruch 1,
**dadurch gekennzeichnet,**
**dass** der versorgungsseitige Eingang des Gleichrichters (B1) für den Anschluss einer Batterie oder eines Akkumulators ausgebildet ist.

10. Frequenzumrichter nach Anspruch 1,
**dadurch gekennzeichnet,**
**dass** der Gleichrichter (B1) dazu eingerichtet ist, eine pulsierende Zwischenkreisgleichspannung (UGleichrichter) bereitzustellen, die zwischen 0V und dem Scheitelwert der primärseitigen Wechselspannung pulsieren kann.

11. Mechatronisches System, umfassend einen geschalteten Reluktanzmotor (3) mit zumindest einer Phasenwicklung (Ph1, Ph2) und zumindest zwei feststehenden Polen (4) und einem mittels der Magnetisierungszustände der Pole (4) bewegbaren oder drehbaren Rotor (5), einem Frequenzumrichter (1) nach einem der Ansprüche 1 bis 10 und einer Steuereinrichtung (2) mit einem Mikroprozessor (12) und einem Speicher (13) mit einem Programm, welches dafür eingerichtet ist, die Schalter (T1, T2, TGem) des Frequenzumrichters (1) zur Erzeugung eines Wechselfeldes oder Drehfeldes in den Phasenwicklungen (Ph1, Ph2) bzw. in den Statorpolen (4) zu steuern.

12. Mechatronisches System nach Anspruch 11,
**dadurch gekennzeichnet,**
**dass** das Programm dafür eingerichtet ist, dass der Mikroprozessor die Schalter (T1, T2, TGem) zur Bereitstellung der Kommutierungszustände Aufmagnetisieren, Freilauf und Abmagnetisieren für die einzelnen Phasenwicklungen (Ph1, Ph2) ansteuern kann.

13. Mechatronisches System nach Anspruch 11 unter Verwendung eines Frequenzumrichters nach Anspruch 8,
**dadurch gekennzeichnet,**
**dass** der Frequenzumrichter (1) als Schalter (T1, T2, TGem) Feldeffekt-Transistoren umfasst, dessen jeweiliger Steuereingang mit der Steuereinrichtung (2) zur Bereitstellung der jeweils vorgesehenen Schaltzustände verbunden sind, so dass sie mittels des Mikroprozessors (12) zu steuern sind.

## Claims

1. Frequency converter, comprising a rectifier (B1) for generating a line-side alternating voltage (UN) and converting it into an intermediate circuit direct voltage (URectifier), at least one controlled switch (T1, T2) for supplying with current at least one phase winding (Ph1, Ph2) of an electric motor which is fed from the direct voltage intermediate circuit (7), a recovery diode (D1, D2), associated in each case with a phase winding (Ph1, Ph2), for decoupling commutation energy and a buffer (CDump) for storing commutation energy due to recharging processes in the phase winding (Ph1, Ph2), **characterised in that** the buffer is a capacitor (CDump) which is connected between the positive pole (9) of the direct voltage intermediate circuit (7) and the output of the recovery diode (D1, D2), and **in that** the capacitor (CDump) can be bridged by means of a further switch (TGem), the switch (TGem) being set up to bridge the capacitor (CDump) in time intervals in order that the capacitor (CDump) can be discharged via the respective activated phase winding (Ph1, Ph2).

2. Frequency converter according to claim 1, **characterised in that** a diode (DGem) is switched in the transmission direction from the positive pole (9) of the direct voltage intermediate circuit (7) to the connection for the phase winding.

3. Frequency converter according to claim 1, **characterised in that** a line filter is applied to the primary side of the rectifier.

4. Frequency converter according to claim 3, **characterised in that** the line filter comprises at least one inductor (LFilter) connected in series and at least one capacitor (CFilter) connected in parallel between the inputs of the rectifier.

5. Frequency converter according to either claim 1 or claim 2, **characterised in that** the frequency converter (1) has two or more switches (T1, T2) and recovery diodes (D1, D2), the switches (T1, T2) and the recovery diodes (D1, D2) each being associated with a single phase winding (Ph1, Ph2) of the motor (3).

6. Frequency converter according to claim 5, **characterised in that** the outputs of the diodes (D1, D2) form a common pole (11) with the input of the switch (TGem) and the buffer (CDump).

7. Frequency converter according to claim 5, **characterised in that** the output of the common diode (DGem) and the output of the common switch (TGem) form a common pole (11) with a common connection of the phase windings (Ph1, Ph2).

8. Frequency converter according to either claim 1 or claim 5, **characterised in that** the switches (T1, T2, TGem) each comprise at least one field-effect transistor, IGBT or bipolar transistor.

9. Frequency converter according to claim 1, **characterised in that** the supply-side input of the rectifier (B1) is formed for the connection of a battery or an accumulator.

10. Frequency converter according to claim 1, **characterised in that** the rectifier (B1) is set up to provide a pulsating intermediate circuit direct voltage (URectifier) which can pulsate between 0 V and the peak value of the primary-side alternating voltage.

11. Mechatronic system, comprising a switched reluctance motor (3) comprising at least one phase winding (Ph1, Ph2) and at least two fixed poles (4) and a rotor (5) which can be moved or rotated by means of the magnetic states of the poles (4), a frequency converter (1) according to any one of claims 1 to 10 and a control device (2) comprising a microprocessor (12) and a store (13) comprising a program which is set up to control the switches (T1, T2, TGem) of the frequency converter (1) to generate an alternating field or rotating field in the phase windings (Ph1, Ph2) and in the stator poles (4).

12. Mechatronic system according to claim 11, **characterised in that** the program is set up in such a way that the microprocessor can activate the switches (T1, T2, TGem) to provide the commutation states of magnetisation, freewheeling and demagnetisation for the individual phase windings (Ph1, Ph2).

13. Mechatronic system according to claim 11 using a frequency converter according to claim 8, **characterised in that** the frequency converter (1) comprises field-effect transistors as switches (T1, T2, TGem), the respective control input of which is connected to the control device (2) for providing the respectively provided switching states, in such a way that they are to be controlled by means of the microprocessor (12).

## Revendications

1. Convertisseur de fréquence, comprenant un redresseur (B1) pour la production ou la transformation d'une tension alternative (UN) côté secteur en une tension continue (UGleichrichter) de circuit intermédiaire, au moins un commutateur (T1, T2) commandé pour l'alimentation en courant d'au moins un enroulement de phase (Ph1, Ph2) d'un moteur électrique qui est alimenté à partir du circuit intermédiaire à tension continue (7), d'une diode de roue libre (D1, D2) affectée respectivement à un enroulement de phase (Ph1, Ph2) pour le découplage de l'énergie de commutation et un accumulateur intermédiaire (CDump) pour l'accumulation de l'énergie de commutation sur la base de processus d'inversion de charge dans l'enroulement de phase (Ph1, Ph2),
**caractérisé en ce que**
l'accumulateur intermédiaire est un condensateur (CDump) qui est monté entre le pôle plus (9) du circuit intermédiaire à tension continue (7) et la sortie de la diode de roue libre (D1, D2), et **en ce que** le condensateur (CDump) peut être ponté au moyen d'un autre commutateur (TGem), le commutateur (TGem) étant aménagé pour ponter le condensateur (CDump) à intervalles de temps afin de permettre la réalisation d'une décharge du condensateur (CDump) par le biais de l'enroulement de phase (Ph1, Ph2) respectivement activé.

2. Convertisseur de fréquence selon la revendication 1,
**caractérisé en ce que**,
en partant du pôle plus (9) du circuit intermédiaire à tension continue (7) vers la connexion pour l'enroulement de phase, une diode (DGem) est montée dans le sens du passage.

3. Convertisseur de fréquence selon la revendication 1,
**caractérisé en ce**
**qu'**un filtre secteur est mis en place sur le côté primaire du redresseur.

4. Convertisseur de fréquence selon la revendication 3,
**caractérisé en ce que**
le filtre secteur comprend au moins une inductance (LFilter) montée en série et au moins un condensateur (CFilter) monté en parallèle entre les entrées du redresseur.

5. Convertisseur de fréquence selon la revendication 1 ou 2,
**caractérisé en ce que**
le convertisseur de fréquence (1) possède deux commutateurs (T1, T2) ou davantage et des diodes de roue libre (D1, D2), les commutateurs (T1, T2) et les diodes de roue libre (D1, D2) devant être affectés respectivement à un enroulement de phase (Ph1, Ph2) individuel du moteur (3).

6. Convertisseur de fréquence selon la revendication 5,
**caractérisé en ce que**
les sorties des diodes (D1, D2) forment un pôle commun (11) avec l'entrée du commutateur (TGem) et l'accumulateur intermédiaire (CDump).

7. Convertisseur de fréquence selon la revendication 5,
**caractérisé en ce que**
la sortie de la diode commune (DGem) et la sortie du commutateur commun (TGem) forment un pôle commun (11) avec une connexion commune des enroulements de phase (Ph1, Ph2).

8. Convertisseur de fréquence selon la revendication 1 ou 5,
**caractérisé en ce que**
les commutateurs (T1, T2, TGem) comprennent respectivement au moins un transistor à effet de champ, un IGBT ou un transistor bipolaire.

9. Convertisseur de fréquence selon la revendication 1,
**caractérisé en ce que**
l'entrée, côté alimentation, du redresseur (B1) est constituée pour la connexion d'une batterie ou d'un accumulateur.

10. Convertisseur de fréquence selon la revendication 1,
**caractérisé en ce que**
le redresseur (B1) est aménagé pour fournir une tension continue pulsatoire de circuit intermédiaire (UGleichrichter) qui peut pulser entre 0 V et la valeur de crête de la tension alternative côté primaire.

11. Système mécatronique, comprenant un moteur à réluctance (3) couplé, avec au moins un enroulement de phase (Ph1, Ph2) et au moins deux pôles fixes (4) et un rotor (5) pouvant être déplacé ou mis en rotation au moyen des états de magnétisation des pôles (4), avec un convertisseur de fréquence (1) selon une des revendications 1 à 10 et un équipement de commande (2) avec un microprocesseur (12) et un accumulateur (13) avec un programme qui est aménagé pour commander les commutateurs (T1, T2, TGem) du convertisseur de fréquence (1) pour la production d'un champ alternatif ou d'un champ tournant dans les enroulements de phase (Ph1, Ph2) ou dans les pôles de stator (4).

12. Système mécatronique selon la revendication 11,
**caractérisé en ce que**
le programme est aménagé pour que le microprocesseur puisse piloter les commutateurs (T1, T2, TGem) pour fournir les états de commutation magnétisation, roue libre et démagnétisation pour les différents enroulements de phase (Ph1, Ph2).

13. Système mécatronique selon la revendication 11, avec utilisation d'un convertisseur de fréquence selon la revendication 8,
**caractérisé en ce que**
le convertisseur de fréquence (1) comprend, en tant que commutateurs (T1, T2, TGem), des transistors à effet de champ dont les entrées de commande respectives sont connectées à l'équipement de commande (2) pour la fourniture des états de commutation respectivement prévus de sorte qu'ils soient commandés au moyen du microprocesseur (12).
